# EUROPEAN PATENT SPECIFICATION

(11) **EP 3 550 713 B1**
(45) Date of publication and mention of the grant of the patent: **03.11.2021**
(21) Application number: 17882363.9
(22) Date of filing: 03.08.2017
(51) Int. Cl.: H02M 7/483, H02M 7/487, H02M 1/00

(54) **CONVERTER**
WANDLER
CONVERTISSEUR

(30) Priority: 23.12.2016 CN 201611207766
(43) Date of publication of application: 09.10.2019
(73) Proprietor: Huawei Technologies Co., Ltd., Longgang District Shenzhen, Guangdong 518129 (CN)
(72) Inventor: HUANG, Zhuyong, Shenzhen Guangdong 518129 (CN); ZHANG, Xiaofei, Shenzhen Guangdong 518129 (CN)
(74) Representative: Goddar, Heinz J.
(86) International application number: PCT/CN2017/095758
(87) International publication number: WO 2018/113309

(56) References cited:
- WO-A1-2015/172851
- WO-A1-2015/172851
- CN-A- 102 624 266
- CN-A- 103 856 089
- CN-A- 104 038 090
- CN-A- 106 787 922
- CN-A- 107 154 745
- JP-A- 2013 116 020
- US-A1- 2011 051 478
- US-A1- 2013 014 384
- US-B2- 6 930 899
- TEHRANI K A ET AL: "A new multilevel inverter model NP without clamping diodes", INDUSTRIAL ELECTRONICS, 2008. IECON 2008. 34TH ANNUAL CONFERENCE OF IEEE, IEEE, PISCATAWAY, NJ, USA, 10 November 2008 (2008-11-10), pages 466-472, XP031825464, ISBN: 978-1-4244-1767-4

## Description

### TECHNICAL FIELD

Embodiments of this application relate to the energy power supply field, and more specifically, to a converter.

### BACKGROUND

Development of the economic society is accompanied with gradual prominence of an energy crisis and gradual deterioration of the global environment. Therefore, developing and using clean alternative energy has become an important goal of the energy industry. With development of the new energy power generation industry, the energy storage industry, and the new energy automobile industry, as a core energy control apparatus, a converter becomes one of key factors in clean energy application. The converter is an essential unit for transferring renewable energy, that is, solar photovoltaic power, to a power grid.

The converter is configured to: connect an alternating current power supply system and a direct current power supply system, and transfer energy between the two systems. The converter has two working states, that is, rectification and inversion, according to different energy flow directions. Inversion means that energy is transferred from the direct current system to the alternating current system, and rectification means that energy is transferred from the alternating current system to the direct current system.

Generally, the converter includes a switching network, a filter that connects the switching network and an alternating current system, and a control unit connected to the filter.

The switching network of the converter is usually a two-level switching network that can output two levels. The two-level switching network is of a simple structure, but has a relatively great circuit loss and low conversion efficiency. To improve rectification efficiency of the converter, the converter may use a multi-level switching network.

However, with improvement of people's requirement for converter efficiency, due to a circuit loss of a conventional multi-level switching network, converter efficiency is increasingly incapable of meeting the people's requirement. That is, a converter with higher efficiency is expected.

US 6,930,899 B2 discloses an n-point-converter circuit with two series-connected power Converter valves, each having turn-off semiconductor switches, is disclosed. The Converter circuit has a voltage intermediate circuit with electrically series-connected capacitors. The voltage intermediate circuit is connected in parallel to DC-side terminals of the series-connected power Converter valves. At least one AC-side terminal can be connected to one or more of the n potentials of the voltage intermediate circuit by means of cross arms, each of which includes at least turn-off semiconductor switches. The multipoint Converter is easy to implement, has an improved output voltage quality, and possesses an emergency running feature.

TEHRANI K A ET AL: "A new multilevel inverter model NP without clamping diodes", INDUSTRIAL ELECTRONICS, 2008. IECON 2008, 34TH ANNUAL CONFERENCE OF IEEE, IEEE, PISCATAWAY, NJ, USA, 10 November 2008, pages 466-472, discloses a novel multilevel inverter neutral point (MNP). This system consists of a series of monodirectional and bidirectional switch. If one or several bidirectional power switches of this inverter burn out or to become ruined by reason an over voltage or depreciation, it stays in the previous level. Indeed, for a three-level NP to occur a defect in bidirectional switch (middle switch), this system operate in two level mode before detecting defect.

WO 2015/172851 A1 discloses a multi-level inverter which introduces a new topology wherein Standard IGBTs can be employed in place of common emitter IGBTs, wherein switching and conduction losses are minimized and wherein the niunber of implemented levels can be easily increased with the addition of a minimum number of components.

CN 104 038 090 A discloses a T-shaped multi-level inverter circuit based on reverse blocking IGBT (Insulated Gate Bipolar Transistor) antiparallel connection. The T-shaped multi-level inverter circuit comprises a two-way controllable switch, a power device and a direct-current capacitor; the two-way controllable switch comprises a plurality of reverse blocking IGBTs which are in antiparallel connection with each other in pairs; one side of a connecting wire of the reverse blocking IGBTs in antiparallel connection with each other in pairs after being connected in parallel is connected with a power switch tube, while the other side of the connecting wire is connected with the direct-current capacitor. The T-shaped multi-level inverter circuit is characterized in that after the reverse blocking IGBTs are in antiparallel connection with each other to form the two-way controllable switch, the antiparallel reverse blocking IGBTs are connected at the midpoints of a plurality of series capacitors without increasing the conduction loss, and then a plurality of midpoint voltage clamping circuits to realize five-level outputs, and with the increase of the number of output levels, the harmonic distortion of an output voltage is improved, the desired filter inductance is lower or the switching frequency can be reduced accordingly.

US 2011/0051478 A1 discloses a three-level PWM converter which includes first to third fuses having one terminals connected to a DC positive bus, a DC negative bus and a DC neutral point bus, respectively, first and second IGBT elements connected between respective ones of the other terminals of the first and second fuses and an AC line, an AC switch connected between the AC line and the other terminal of the third fuse, first and second diodes connected in anti-parallel to the first and second IGBT elements respectively, a first capacitor connected between the other terminals of the first and third fuses, and a second capacitor connected between the other terminals of the second and third fuses.

US 2013/014384 A1 discloses a method that provides multilevel inverters having a plurality of levels using a simplified topology. For single phase systems, embodiments provide a full-bridge topology using bidirectional switching interconnections.

### SUMMARY

Embodiments of this application provide a converter, so that a circuit loss of a switching network can be reduced and converter efficiency can be improved when four or more levels are provided.

According to a first aspect, as set forth in claim 1, this application provides a converter, configured to be connected between a direct current system and an alternating current system for mutual conversion between a direct current and an alternating current. The converter includes a switching network, a filter, and a control unit, the switching network includes a first switching circuit and a second switching circuit, the control unit is configured to output a control signal to the switching network, the switching network is configured to convert, into multiple levels according to the control signal that is output by the control unit, a direct current that is output by the direct current system, and the filter is configured to output an alternating current to the alternating current system according to the multiple levels. The first switching circuit includes M energy storage elements and M bridge arm circuits, one of the M bridge arm circuits includes only one full-controlled component, remaining M-1 bridge arm circuits each include two full-controlled components that are reversely connected in series, and M is an integer greater than or equal to 1. A first end of an i^{th} bridge arm circuit in the M bridge arm circuits is connected to a first end of an (i+1)^{th} bridge arm circuit in the M bridge arm circuits by using an i^{th} energy storage element in the M energy storage elements, a first end of an M^{th} bridge arm circuit in the M bridge arm circuits is connected to a first end of the filter by using an M^{th} energy storage element in the M energy storage elements, a second end of each of the M bridge arm circuits is connected to a second end of the filter, and i is an integer that is greater than or equal to 1 and less than M+1. The second switching circuit includes N energy storage elements and N bridge arm circuits, one of the N bridge arm circuits includes only one full-controlled component, remaining N-1 bridge arm circuits each include two full-controlled components that are reversely connected in series, and N is an integer greater than or equal to 4-M. A first end of a j^{th} bridge arm circuit in the N bridge arm circuits is connected to a first end of a (j+1)^{th} bridge arm circuit in the N bridge arm circuits by using a j^{th} energy storage element in the N energy storage elements, a first end of an N^{th} bridge arm circuit in the N bridge arm circuits is connected to the first end of the filter by using an N^{th} energy storage element in the N energy storage elements, a second end of each of the N bridge arm circuits is connected to the second end of the filter, and j is an integer that is greater than or equal to 1 and less than N+1. Each full-controlled component in the N bridge arm circuits and the M bridge arm circuits is connected to the control unit, and the control unit is specifically configured to control turning-on and turning-off of each full-controlled component, wherein the first switching circuit and the second switching circuit comprise different numbers of bridge arm circuits, and wherein each full-controlled component is a switching transistor.

According to the converter in this embodiment of this application, because the first switching circuit and the second switching circuit in the switching network each include one bridge arm circuit that includes only one full-controlled component, when the converter provides multiple levels, a current in each level state passes through a maximum of two full-controlled components, and currents corresponding to two level states each need to pass through only one full-controlled component. Therefore, a circuit conduction loss can be reduced and circuit efficiency can be improved. In addition, the converter in this embodiment of this application may provide bidirectional circuit energy, that is, the circuit energy may be transferred from a direct current side to an alternating current side, or may be transferred from an alternating current side to a direct current side.

In a possible implementation, the switching network further includes a third switching circuit, the third switching circuit includes two full-controlled components that are reversely connected in series, a first end of the third switching circuit is connected to the first end of the filter, a second end of the third switching circuit is connected to the second end of the filter, each full-controlled component in the third switching circuit is connected to the control unit, and the control unit is configured to control turning-on and turning off of each full-controlled component in the third switching circuit.

In a possible implementation, M is an integer greater than or equal to 2, and M=N.

In a possible implementation, each full-controlled component includes a diode that is reversely connected to the full-controlled component in parallel.

In a possible implementation, the full-controlled component in each bridge arm circuit is reversely connected to a diode in parallel.

In a possible implementation, the energy storage element is a polar capacitor.

In a possible implementation, the first end of the filter is grounded.

In a possible implementation, the filter includes a power inductor and a filter capacitor.

### BRIEF DESCRIPTION OF DRAWINGS

FIG. 1 is a schematic diagram of an application scenario of a converter;
FIG. 2 is a schematic circuit diagram of a conventional converter;
FIG. 3 is a schematic circuit diagram of a converter;
FIG. 4 is a schematic circuit diagram of a converter;
FIG. 5 is a schematic circuit diagram of a converter which is provided as competitive example;
FIG. 6 is a schematic circuit diagram of a converter which is provided as competitive example;
FIG. 7 is a schematic diagram of an output level of a converter;
FIG. 8 is a schematic circuit diagram of a converter according to an embodiment of this application;
FIG. 9 is a schematic circuit diagram of a converter which is provided as competitive example; and
FIG. 10 is a schematic circuit diagram of a converter according to an embodiment of this application.

### DESCRIPTION OF EMBODIMENTS

The following further describes in detail technical solutions in embodiments of this application with reference to the accompanying drawings and embodiments. Embodiments not falling under the scope of the claims are provided only as competitive examples.

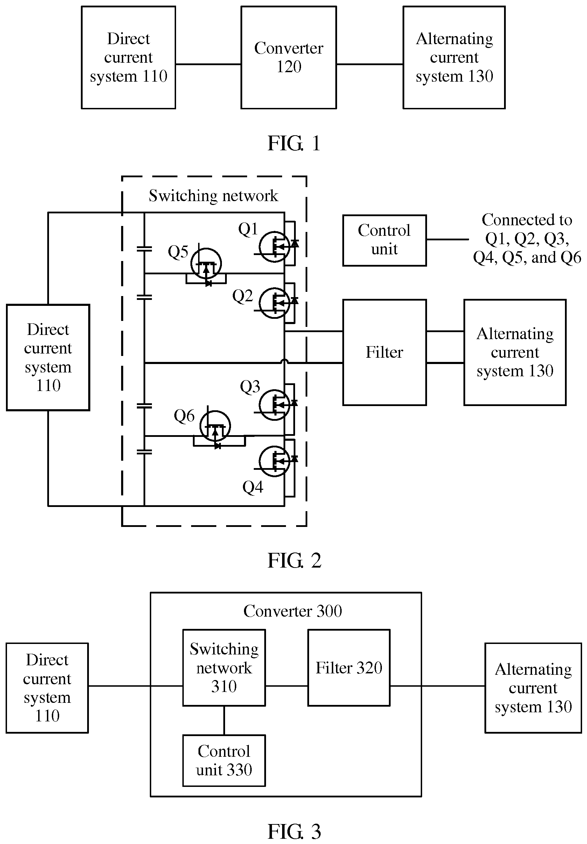

As shown in FIG. 1, a scenario to which a converter in the embodiments of this application can be applied may include a direct current system 110, a converter 120, and an alternating current system 130.

It should be understood that the embodiments of this application are not limited to the application scenario shown in FIG. 1. In addition, the application scenario shown in FIG. 1 is merely an example, and the scenario to which the converter in the embodiments of this application can be applied may further include another system, module, or unit.

In FIG. 1, the direct current system 110 may be any power supply that provides a direct current, and includes a storage battery, a solar photovoltaic panel, and the like. The alternating current system 130 may be any device or apparatus that requires alternating current input, and includes a power grid, a motor, and the like. The converter 120 is configured to: convert, into an alternating current, a direct current provided by the direct current system 110, and output the alternating current to the alternating current system 130; or convert, into a direct current, an alternating current that is output by the alternating current system 130, and output the direct current to the direct current system 110.

For example, in a photovoltaic power supply system, a direct current generated by a solar photovoltaic panel is converted, by using a converter, into an alternating current with same frequency as power grid frequency, and the alternating current is transferred to a power grid (that is, an alternating current unit). Therefore, the photovoltaic power supply system is tied to the power grid.

For another example, a converter in an electric vehicle may work bidirectionally. Specifically, a direct current that is output by a storage battery (that is, a direct current system) of the electric vehicle is converted into an alternating current by using the converter, and the alternating current is output to a motor (that is, an alternating current system). Then, when the electric vehicle decelerates, an inverse alternating current generated by the motor may be converted into a direct current by using the converter, to charge the storage battery.

FIG. 2 is a schematic structural diagram of a conventional converter. In the converter shown in FIG. 2, idle ports of switching transistors Q1, Q2, Q3, Q4, Q5, and Q6 included in a switching network are connected to a control unit of the converter. For brevity, the control unit and a connection relationship between the control unit and the switching transistors are not shown in FIG. 2.

It can be learned from FIG. 2 that, in the switching network of the conventional converter, at any time, a direct current that is output from a direct current system needs to pass through two switching transistors before being converted into an alternating current, so that the alternating current is output to an alternating current system. Specifically, the direct current needs to pass through the switching transistors Q1 and Q2, or needs to pass through the switching transistors Q5 and Q2, or needs to pass through the switching transistors Q6 and Q3, or needs to pass through the switching transistors Q4 and Q3.

Such a structure of the switching network of the conventional converter causes a great circuit conduction loss, and consequently reduces converter efficiency.

Therefore, the embodiments of this application provide a new converter. A switching network of the new converter can reduce a circuit loss, and therefore improve converter efficiency. FIG. 3 is a schematic circuit diagram of a converter according to an embodiment of this application.

As shown in FIG. 3, a converter 300 in this embodiment of this application is connected between a direct current system 110 and an alternating current system 130. The converter 300 may be a three-phase converter.

The converter 300 includes a switching network 310, a filter 320, and a control unit 330. The switching network 310 is connected to the direct current system 110, the filter 320, and the control unit 330. The filter 320 is connected to the alternating current system 120. The control unit 330 may be or may be not connected to the filter 320. This is not limited in this application.

The control unit 330 is configured to output a control signal to the switching network 310. The switching network 310 is configured to convert, into multiple levels according to the control signal that is output by the control unit 330, a direct current that is output by the direct current system 110. The filter 320 is configured to output an alternating current to the alternating current system 120 according to the multiple levels.

If the control unit 330 is connected to the filter 320, the control unit 330 may be specifically configured to output the control signal to the switching network 310 according to an alternating current that is output by the filter, to control the switching network 310 to output the multiple levels.

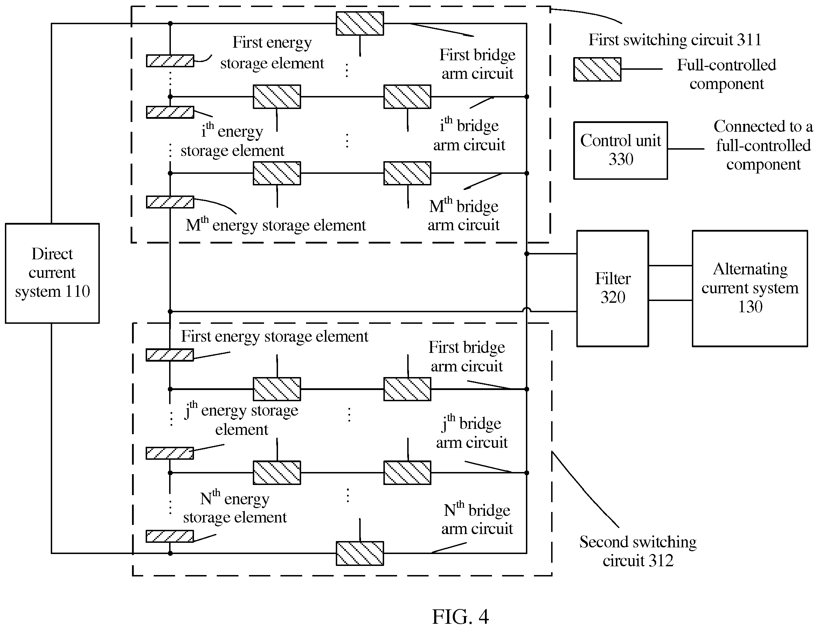

A more detailed schematic circuit diagram of the switching network 310 in this embodiment of this application is shown in FIG. 4. It can be learned from FIG. 4 that, the switching network 310 includes a first switching circuit 311 and a second switching circuit 322.

The first switching circuit 311 includes M energy storage elements (an energy storage element 1 to an energy storage element M) and M bridge arm circuits (a bridge arm circuit 1 to a bridge arm circuit M), and M is an integer greater than or equal to 1.

One of the M bridge arm circuits includes one full-controlled component, and remaining M-1 bridge arm circuits each include two full-controlled components. The two full-controlled components are reversely connected in series. In this embodiment of this application, the full-controlled component may be also referred to as a switching transistor.

That two full-controlled components in a bridge arm circuit are reversely connected in series means that when the two full-controlled components are insulated gate bipolar transistors (Insulate-Gate Bipolar Transistor, IGBT), a collector of a first IGBT is connected to a collector of a second IGBT, or an emitter of a first IGBT is connected to an emitter of a second IGBT; or when the two full-controlled components are metal-oxide-semiconductor field-effect transistors (Metal-Oxide-Semiconductor Field-Effect Transistor, MOSFET), a drain of a first MOSFET is connected to a drain of a second MOSFET, or a source of a first MOSFET is connected to a source of a second MOSFET.

If M is 1, that is, the first switching circuit includes only one bridge arm circuit, the bridge arm circuit includes only one full-controlled component.

A first end of an i^{th} bridge arm circuit in the M bridge arm circuits is connected to a first end of an (i+1)^{th} bridge arm circuit in the M bridge arm circuits by using an i^{th} energy storage element in the M energy storage elements, a first end of an M^{th} bridge arm circuit in the M bridge arm circuits is connected to a first end of the filter by using an M^{th} energy storage element in the M energy storage elements, a second end of each of the M bridge arm circuits is connected to a second end of the filter, and i is an integer that is greater than or equal to 1 and less than M+1.

That is, one ends of the first bridge arm circuit to the M^{th} bridge arm circuit in the M bridge arm circuits are sequentially connected by using one energy storage element, the one ends of the M^{th} bridge arm circuit and an (M-1)^{th} bridge arm circuit are connected to one end of the filter by using another energy storage element, and the other ends of all the M bridge arm circuits are connected to the other end of the filter.

The second switching circuit includes N energy storage elements and N bridge arm circuits, and N is an integer greater than or equal to 4-M. That is, a sum of a quantity of bridge arm circuits included in the second switching circuit and a quantity of bridge arm circuits included in the first switching circuit needs to be greater than or equal to 4, and a sum of a quantity of energy storage elements included in the second switching circuit and a quantity of energy storage elements included in the first switching circuit needs to be greater than or equal to 4.

Composition and connection relationships of the bridge arm circuits and the energy storage elements in the second switching circuit are similar to those in the first switching circuit. For brevity, details are not described herein again.

One port of each full-controlled component included in the N bridge arm circuits in the second switching circuit and the M bridge arm circuits in the first switching circuit is connected to the control unit 330. The port is configured to receive the control signal that is output by the control unit 330, and then each full-controlled component is turned on or turned off under control of the control signal received by each full-controlled component, so that the full-controlled component can output multiple levels to the filter.

That is, the control unit 330 is configured to output the control signal to each full-controlled component, to control turning-on and turning-off of each full-controlled component, so that the entire switching network 310 can output the multiple levels to the filter according to the direct current received from the direct current system.

The M energy storage elements in the first switching circuit and the N energy storage elements in the second switching circuit are configured to divide a voltage that is output by the direct current system to the switching network.

According to the converter in this embodiment of this application, because the first switching circuit and the second switching circuit in the switching network each include one bridge arm circuit that includes only one full-controlled component, when the converter provides multiple levels, a current in each level state passes through a maximum of two full-controlled components, and currents corresponding to two level states each need to pass through only one full-controlled component. Therefore, a circuit conduction loss can be reduced and circuit efficiency can be improved. In addition, the converter in this embodiment of this application may provide bidirectional circuit energy, that is, the circuit energy may be transferred from a direct current side to an alternating current side, or may be transferred from an alternating current side to a direct current side.

Optionally, a first end of the bridge arm circuit that includes one full-controlled component in the first switching circuit may be connected to a positive electrode of the voltage that is output by the direct current system to the switching network, and a first end of the bridge arm circuit that includes one full-controlled component in the second switching circuit may be connected to a negative electrode of the voltage that is output by the direct current system to the switching network.

Generally, M=N. That is, the quantity of bridge arm circuits and the quantity of energy storage elements in the first switching circuit are respectively equal to the quantity of bridge arm circuits and the quantity of energy storage elements in the second switching circuit, and all the quantities are greater than or equal to 2.

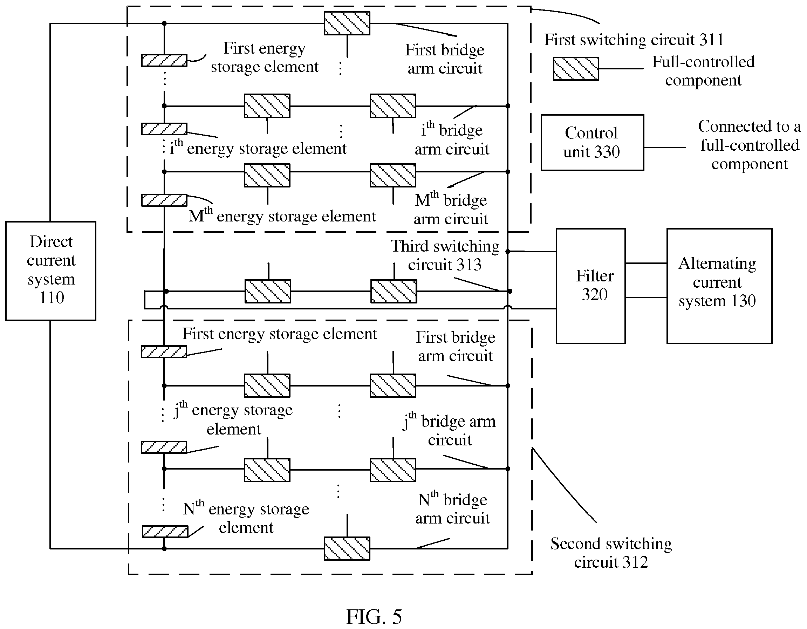

As shown in FIG. 5, optionally, the switching network 310 of the converter in this embodiment of this application may further include a third switching circuit 313. The third switching circuit 313 includes one bridge arm circuit. The bridge arm circuit includes two full-controlled components, and the two full-controlled components are reversely connected in series.

A first end of the third switching circuit is connected to the first end of the filter 320, and a second end of the third switching circuit is connected to the second end of the filter 320.

One port of each full-controlled component in the third switching circuit is connected to the control unit 330. The port is configured to receive the control signal that is output by the control unit 330, and then each full-controlled component is turned on or turned off under control of the control signal received by the full-controlled component, so that the full-controlled component can output multiple levels to the filter together with the full-controlled component in the first switching circuit or the second switching circuit.

That is, the control unit 330 may be further configured to output the control signal to each full-controlled component in the third switching circuit, to control turning-on and turning-off of each full-controlled component, so that the entire switching network 310 can output the multiple levels to the filter according to the direct current received from the direct current system.

The full-controlled component in the switching network in this embodiment of this application may be a component such as a gate turn-off thyristor (Gate Turn-Off Thyristor, GTO), a MOSFET, or an IGBT.

Optionally, the full-controlled component in the switching network in this embodiment of this application may internally include a diode, and the diode is reversely connected in parallel to the full-controlled component to which the diode belongs.

Optionally, each bridge arm circuit in the switching network in this embodiment of this application may further include a diode, and the diode is reversely connected in parallel to a full-controlled component in the bridge arm circuit to which the diode belongs.

That the diode is reversely connected to the full-controlled component in parallel means that when the full-controlled component is an IGBT, a collector of the IGBT is connected to a cathode of the diode, and an emitter of the IGBT is connected to an anode of the diode; or when the full-controlled component is a MOSFET, a drain of the MOSFET is connected to a cathode of the diode, or a source of the MOSFET is connected to an anode of the diode.

Optionally, the energy storage element in the switching network in this embodiment of this application may be a polar capacitor. Certainly, the energy storage element may be an ordinary capacitor (that is, a capacitor regardless of an electrode).

Costs can be reduced when the energy storage element is a polar capacitor rather than an ordinary capacitor. Energy storage efficiency can be improved and an area or a volume of the switching network can be reduced when the energy storage element is an ordinary capacitor rather than a polar capacitor.

In this embodiment of this application, optionally, the end (that is, the first end) that is of the filter and that is connected to the energy storage elements in the bridge arm circuit may be grounded. In other words, the M^{th} energy storage element in the first switching circuit and the N^{th} energy storage element in the second switching circuit may be grounded.

If the energy storage elements in the first switching circuit and the energy storage elements in the second switching circuit are polar capacitors, a negative electrode of an M^{th} polar capacitor in the first switching circuit is grounded, and a positive electrode of an N^{th} polar capacitor in the second switching circuit is grounded.

In this embodiment of this application, optionally, the M^{th} energy storage element in the first switching circuit and the N^{th} energy storage element in the second switching circuit may be connected to a common end in the alternating current system. The common end may be a neutral wire.

In this embodiment of this application, optionally, an example structure of the filter 320 is as follows: The filter 320 may include a power inductor and a filter capacitor. One end of the filter capacitor is connected to one end of the power inductor, the other end of the filter capacitor is connected to the M^{th} energy storage element in the first switching circuit and the N^{th} energy storage element in the second switching circuit, and the other end of the power circuit is connected to the second end of each bridge arm circuit.

In this embodiment of this application, optionally, the converter 300 may further include a unit or a module such as a sampling unit. The sampling unit may be configured to sample a voltage value of each energy storage element. For brevity, details are not described herein.

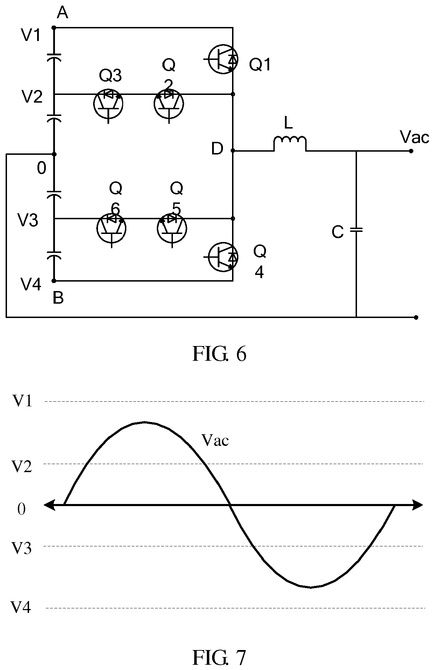

The following describes in detail a circuit structure and a working principle of a converter which is provided as competitive example with reference to FIG. 6. M=2, N=2, an energy storage element is a polar capacitor, a full-controlled component internally includes a diode that is reversely connected to the full-controlled component in parallel, and the filter includes an inductor and a capacitor.

A switching network of a converter shown in FIG. 6 may output four levels, and therefore the switching network may be also referred to as a four-level circuit.

In FIG. 6, V1, V2, V3, and V4 are respectively sub-voltages, of a voltage output by a direct current system to the switching network, on polar capacitors C1, C2, C3, and C4. The direct current system may be connected to a point A and a point B of the switching network.

Full-controlled components Q1, Q2, Q3, Q4, Q5, and Q6 are connected to a control unit, receive a control signal output by the control unit, and are turned on or turned off under control of the control signal. For brevity of the accompanying drawing, connection lines between the control unit and the full-controlled components Q1, Q2, Q3, Q4, Q5, and Q6 are not drawn in the figure.

The converter shown in FIG. 6 may further include a sampling unit. The sampling unit is configured to sample and obtain V1, V2, V3, V4, and a voltage Vac that is output by the converter to an alternating current system, so that the control unit controls turning-on or turning off of the full-controlled components Q1, Q2, Q3, Q4, Q5, and Q6 according to the foregoing voltage values sampled by the sampling unit, and the switching network can output multiple level values.

Specifically, after the sampling unit obtains V1, V2, V3, and V4, a control switch outputs the control signal to Q1, Q2, Q3, Q4, Q5, and Q6.

If V2≤Vac<V1, the control unit controls Q3 to be steady on and controls Q4 and Q5 to be steady off, and Q6 may be on or may be off. In this case, wave transmission logic of Q1 is opposite to wave transmission logic of Q2. A specific implementation in which Q1 and Q2 complement each other in terms of wave transmission is as follows:

It is assumed that a switching period is T, a duty cycle of on time of Q1 is D regardless of impact from dead time of Q1 and Q2. When Q1 is on and Q2 is off, a potential of a point D is equal to V1, and on time of Q1 is D×T. When Q2 is on and Q1 is off, a potential of a point D is equal to V2, and off time of Q1 is (1-D)×T. A voltage of an output end of an inductor L is Vac. Because T is short, Vac may be regarded as a constant value in one period T. It can be learned from an inductor flux volt-second balance principle that D×T×(V1-Vac)+(1-D)×T×(V2-Vac)=0, that is, D=(Vac-V2)/(V1-V2).

When Q1 is on and Q2 is off, there is only one switching transistor Q1 from a direct current side to the point D, and an inductance current may flow in a positive direction, that is, flow from the direct current side and pass through Q1; or may flow in a negative direction, that is, flow to the direct current side and pass through a diode inside Q1. When Q1 is off and Q2 is on, there are two switching transistors Q2 and Q3 from a direct current side to the point D, and an inductance current may flow in a positive direction, that is, flow from the direct current side and pass through diodes inside Q3 and Q2; or may flow in a negative direction, that is, flow to the direct current side and pass through diodes inside Q2 and Q3.

If V3≤Vac<V2, the control unit controls Q2 and Q6 to be steady on and controls Q1 and Q4 to be off, and Q3 and Q5 complement each other in terms of wave transmission. A specific implementation in which Q3 and Q5 complement each other in terms of wave transmission is as follows:

When Q3 is on and Q5 is off, a potential of a point D is equal to V2. Assuming that a duty cycle of Q3 is D regardless of impact from dead time of Q3 and Q5, on time of Q3 is D×T. When Q5 is on and Q3 is off, a potential of a point D is equal to V3, and off time of Q3 is (1-D)×T. A voltage of an output end of an inductor L is Vac. Because T is short, Vac may be regarded as a constant value in one period T. It can be learned from an inductor flux volt-second balance principle that D×T×(V2-Vac)+(1-D)×T×(V3-Vac)=0, that is, D=(Vac-V3)/(V2-V3).

When Q3 is on and Q5 is off, there are two switching transistors Q3 and Q2 from a direct current side to the point D, and an inductance current may flow in a positive direction, that is, flow from the direct current side and pass through diodes inside Q3 and Q2; or may flow in a negative direction, that is, flow to the direct current side and pass through diodes inside Q2 and Q3. When Q3 is off and Q5 is on, there are two switching transistors Q5 and Q6 from a direct current side to the point D, and an inductance current may flow in a positive direction, that is, flow from the direct current side and pass through diodes inside Q6 and Q5; or may flow in a negative direction, that is, flow to the direct current side and pass through diodes inside Q5 and Q6.

If V4≤Vac<V3, the control unit controls Q5 to be steady on and controls Q1 and Q3 to be off, Q2 may be on or off, and Q4 and Q6 complement each other in terms of wave transmission. A specific implementation in which Q4 and Q6 complement each other in terms of wave transmission is as follows:

When Q6 is on and Q4 is off, a potential of a point D is equal to V3. Assuming that a duty cycle of Q6 is D regardless of impact from dead time of Q4 and Q6, on time of Q6 is D×T. When Q4 is on and Q6 is off, a potential of a point D is equal to V4, and off time of Q6 is (1-D)×T. A voltage of an output end of an inductor L is Vac. Because T is short, Vac may be regarded as a constant value in one period T. It can be learned from an inductor flux volt-second balance principle that D×T×(V3-Vac)+(1-D)×T×(V4-Vac)=0, that is, D=(Vac-V4)/(V3-V4).

When Q6 is on and Q4 is off, there are two switching transistors Q5 and Q6 from a direct current side to the point D, and an inductance current may flow in a positive direction, that is, flow from the direct current side and pass through diodes inside Q6 and Q5; or may flow in a negative direction, that is, flow to the direct current side and pass through diodes inside Q5 and Q6. When Q6 is off and Q4 is on, there is only one switching transistor Q4 from a direct current to the point D, and an inductance current may flow in a positive direction, that is, flow from the direct current side and pass through a diode inside Q4; or may flow in a negative direction, that is, flow to the direct current side and passes through Q4.

Finally, a schematic diagram of Vac is shown in FIG. 7.

It can be learned from the foregoing content that the converter shown in FIG. 6 in this embodiment of this application may provide four level states, and only Q1 and Q4 need to be respectively passed through in two of the level states. Therefore, a circuit loss is reduced and circuit efficiency is improved.

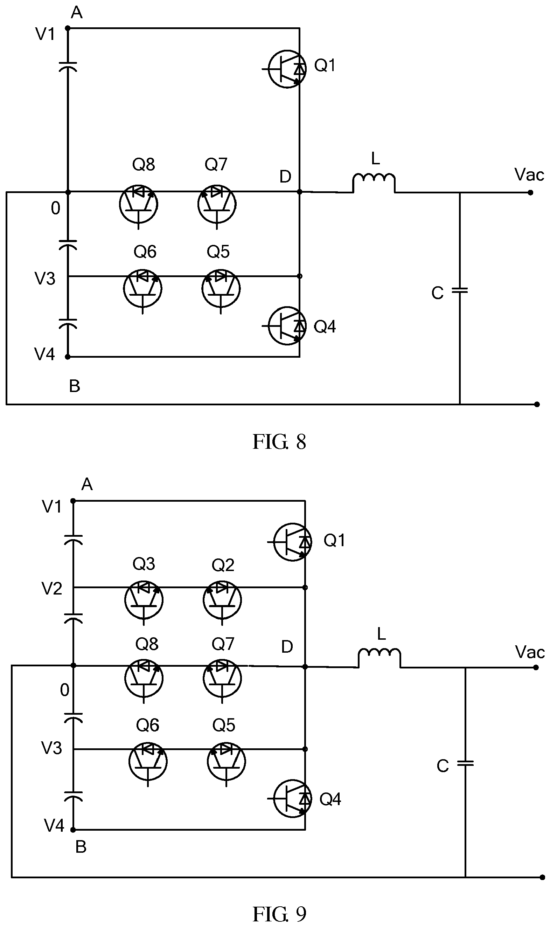

FIG. 8 is a schematic circuit diagram of a converter according to another embodiment of this application. The converter shown in FIG. 8 may provide four level states: V1, 0, V3, and V4.

A first switching circuit in a switching network includes one bridge arm circuit, and the bridge arm circuit includes only one full-controlled component Q1. A second switching circuit in the switching network includes two bridge arm circuits. One bridge arm circuit includes one full-controlled component Q4, and the other bridge arm circuit includes two full-controlled components Q5 and Q6. The switching network further includes a third switching circuit. The third switching circuit includes one bridge arm circuit, and the bridge arm circuit includes two full-controlled components Q7 and Q8.

A working principle of the converter shown in FIG. 8 is similar to a working principle of the converter shown in FIG. 6. For brevity, details are not described herein again.

FIG. 9 is a schematic circuit diagram of a converter which is provided as competitive example. The converter shown in FIG. 9 may provide five level states: V1, V2, 0, V3, and V4.

A first switching circuit in a switching network includes two bridge arm circuits. One bridge arm circuit includes one full-controlled component Q1, and the other bridge arm circuit includes two full-controlled components Q2 and Q3. A second switching circuit in the switching network includes two bridge arm circuits. One bridge arm circuit includes one full-controlled component Q4, and the other bridge arm circuit includes two full-controlled components Q5 and Q6. The switching network further includes a third switching circuit. The third switching circuit includes one bridge arm circuit, and the bridge arm circuit includes two full-controlled components Q7 and Q8.

A working principle of the converter shown in FIG. 9 is similar to a working principle of the converter shown in FIG. 7. For brevity, details are not described herein again.

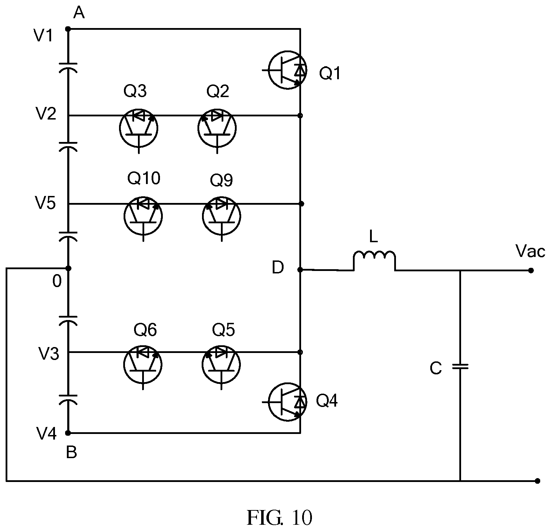

FIG. 10 is a schematic circuit diagram of a converter according to another embodiment of this application. The converter shown in FIG. 10 may provide five level states: V1, V2, V5, V3, and V4.

A first switching circuit in a switching network includes three bridge arm circuits. One bridge arm circuit includes one full-controlled component Q1, another bridge arm circuit includes two full-controlled components Q2 and Q3, and a third bridge arm circuit includes two full-controlled components Q9 and Q10. A second switching circuit in the switching network includes two bridge arm circuits. One bridge arm circuit includes one full-controlled component Q4, and the other bridge arm circuit includes two full-controlled components Q5 and Q6.

A working principle of the converter shown in FIG. 10 is similar to a working principle of the converter shown in FIG. 7. For brevity, details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A converter (120, 300), configured to be connected between a direct current system and an alternating current system for mutual conversion between a direct current and an alternating current, wherein the converter (120, 300) comprises a switching network (310), a filter (320), and a control unit (330), the switching network (310) comprises a first switching circuit (311) and a second switching circuit (322), the control unit (330) is configured to output a control signal to the switching network (310), the switching network (310) is configured to convert, into multiple-levels voltage according to the control signal that is output by the control unit (330), a direct current that is output by the direct current system, and the filter (320) is configured to output an alternating current to the alternating current system according to the multiple levels;
the first switching circuit (311) comprises M energy storage elements and M bridge arm circuits, one of the M bridge arm circuits comprises only one full-controlled component, remaining M-1 bridge arm circuits each comprise two full-controlled components that are reversely connected in series, and M is an integer greater than or equal to 1;
a first end of an i^{th} bridge arm circuit in the M bridge arm circuits is connected to a first end of an (i+1)^{th} bridge arm circuit in the M bridge arm circuits by using an i^{th} energy storage element in the M energy storage elements, a first end of an M^{th} bridge arm circuit in the M bridge arm circuits is connected to a first end of the filter (320) by using an M^{th} energy storage element in the M energy storage elements, a second end of each of the M bridge arm circuits is connected to a second end of the filter (320), and i is an integer that is greater than or equal to 1 and less than M+1;
the second switching circuit (322) comprises N energy storage elements and N bridge arm circuits, one of the N bridge arm circuits comprises only one full-controlled component, remaining N-1 bridge arm circuits each comprise two full-controlled components that are reversely connected in series, and N is an integer greater than or equal to 4-M;
a first end of a j^{th} bridge arm circuit in the N bridge arm circuits is connected to a first end of a (j +1)^{th} bridge arm circuit in the N bridge arm circuits by using a j^{th} energy storage element in the N energy storage elements, a first end of an N^{th} bridge arm circuit in the N bridge arm circuits is connected to the first end of the filter (320) by using an N^{th} energy storage element in the N energy storage elements, a second end of each of the N bridge arm circuits is connected to the second end of the filter (320), and j is an integer that is greater than or equal to 1 and less than N+1; and
each full-controlled component in the N bridge arm circuits and the M bridge arm circuits is connected to the control unit (330), and the control unit (330) is specifically configured to control turning-on and turning-off of each full-controlled component,
wherein the first switching circuit and the second switching circuit comprise different numbers of bridge arm circuits, and wherein each full-controlled component is a switching transistor.

2. The converter according to claim 1, wherein the switching network further comprises a third switching circuit (313; Q7, Q8) the third switching circuit comprises two full-controlled components that are reversely connected in series, a first end of the third switching circuit is connected to the first end of the filter (320), a second end of the third switching circuit is connected to the second end of the filter, each full-controlled component in the third switching circuit is connected to the control unit, and the control unit is configured to control turning-on and turning-off of each full-controlled component in the third switching circuit.

3. The converter (120, 300) according to claim 1 or 2, wherein M is an integer greater than or equal to 2, and M=N.

4. The converter (120, 300) according to any one of claims 1 to 3, wherein each full-controlled component comprises a diode that is reversely connected to the full-controlled component in parallel.

5. The converter (120, 300) according to any one of claims 1 to 3, wherein the full-controlled component in each bridge arm circuit is reversely connected to a diode in parallel.

6. The converter (120, 300) according to any one of claims 1 to 5, wherein the energy storage element is a polar capacitor.

7. The converter (120, 300) according to any one of claims 1 to 6, wherein the first end of the filter (320) is grounded.

8. The converter (120, 300) according to any one of claims 1 to 7, wherein the filter (320) comprises a power inductor and a filter (320) capacitor.

## Patentansprüche

1. Wandler (120, 300), der dazu ausgelegt ist, zur wechselseitigen Umwandlung zwischen einem Gleichstrom und einem Wechselstrom zwischen ein Gleichstromsystem und ein Wechselstromsystem geschaltet zu werden, wobei der Wandler (120, 300) ein Schaltnetzwerk (310), ein Filter (320) und eine Steuereinheit (330) umfasst, das Schaltnetzwerk (310) eine erste Umschaltschaltung (311) und eine zweite Umschaltschaltung (322) umfasst, die Steuereinheit (330) zum Ausgeben eines Steuersignals an das Schaltnetzwerk (310) ausgelegt ist, das Schaltnetzwerk (310) ausgelegt ist zum Umwandeln, in eine Spannung mit mehreren Pegeln gemäß dem Steuersignal, das durch die Steuereinheit (330) ausgegeben wird, eines Gleichstroms, der durch das Gleichstromsystem ausgegeben wird, und das Filter (320) zum Ausgeben eines Wechselstroms an das Wechselstromsystem gemäß den mehreren Pegeln ausgelegt ist;
die erste Umschaltschaltung (311) umfasst M Energiespeicherungselemente und M Brückenzweigschaltungen, eine der M Brückenzweigschaltungen umfasst lediglich eine vollständig gesteuerte Komponente, verbleibende M-1 Brückenzweigschaltungen umfassen jeweils zwei vollständig gesteuerte Komponenten, die entgegengesetzt in Reihe geschaltet sind, und M ist eine ganze Zahl größer oder gleich 1;
ein erstes Ende einer i-ten Brückenzweigschaltung in den M Brückenzweigschaltungen ist mittels eines i-ten Energiespeicherungselements in den M Energiespeicherungselementen mit einem ersten Ende einer (i+1)-ten Brückenzweigschaltung in den M Brückenzweigschaltungen verbunden, ein erstes Ende einer M-ten Brückenzweigschaltung in den M Brückenzweigschaltungen ist mittels eines M-ten Energiespeicherungselements in den M Energiespeicherungselementen mit einem ersten Ende des Filters (320) verbunden, ein zweites Ende jeder der M Brückenzweigschaltungen ist mit einem zweiten Ende des Filters (320) verbunden und i ist eine ganze Zahl, die größer oder gleich 1 und kleiner als M+1 ist;
die zweite Umschaltschaltung (322) umfasst N Energiespeicherungselemente und N Brückenzweigschaltungen, eine der N Brückenzweigschaltungen umfasst lediglich eine vollständig gesteuerte Komponente, verbleibende N-1 Brückenzweigschaltungen umfassen jeweils zwei vollständig gesteuerte Komponenten, die entgegengesetzt in Reihe geschaltet sind, und N ist eine ganze Zahl größer oder gleich 4-M;
ein erstes Ende einer j-ten Brückenzweigschaltung in den N Brückenzweigschaltungen ist mittels eines j-ten Energiespeicherungselements in den N Energiespeicherungselementen mit einem ersten Ende einer (j+1)-ten Brückenzweigschaltung in den N Brückenzweigschaltungen verbunden, ein erstes Ende einer N-ten Brückenzweigschaltung in den N Brückenzweigschaltungen ist mittels eines N-ten Energiespeicherungselements in den N Energiespeicherungselementen mit dem ersten Ende des Filters (320) verbunden, ein zweites Ende jeder der N Brückenzweigschaltungen ist mit dem zweiten Ende des Filters (320) verbunden und j ist eine ganze Zahl, die größer oder gleich 1 und kleiner als N+1 ist; und
jede vollständig gesteuerte Komponente in den N Brückenzweigschaltungen und den M Brückenzweigschaltungen ist mit der Steuereinheit (330) verbunden und die Steuereinheit (330) ist insbesondere zum Steuern eines Einschaltens und Ausschaltens jeder vollständig gesteuerten Komponente ausgelegt,
wobei die erste Umschaltschaltung und die zweite Umschaltschaltung unterschiedliche Anzahlen von Brückenzweigschaltungen umfassen und wobei jede vollständig gesteuerte Komponente ein Schalttransistor ist.

2. Wandler nach Anspruch 1, wobei das Schaltnetzwerk ferner eine dritte Umschaltschaltung (313; Q7, Q8) umfasst, die dritte Umschaltschaltung zwei vollständig gesteuerte Komponenten umfasst, die entgegengesetzt in Reihe geschaltet sind, ein erstes Ende der dritten Umschaltschaltung mit dem ersten Ende des Filters (320) verbunden ist, ein zweites Ende der dritten Umschaltschaltung mit dem zweiten Ende des Filters verbunden ist, jede vollständig gesteuerte Komponente in der dritten Umschaltschaltung mit der Steuereinheit verbunden ist und die Steuereinheit zum Steuern eines Einschaltens und Ausschaltens jeder vollständig gesteuerten Komponente in der dritten Umschaltschaltung ausgelegt ist.

3. Wandler (120, 300) nach Anspruch 1 oder 2, wobei M eine ganze Zahl größer oder gleich 2 ist und M=N gilt.

4. Wandler (120, 300) nach einem der Ansprüche 1 bis 3, wobei jede vollständig gesteuerte Komponente eine Diode umfasst, die mit der vollständig gesteuerten Komponente entgegengesetzt parallel geschaltet ist.

5. Wandler (120, 300) nach einem der Ansprüche 1 bis 3, wobei die vollständig gesteuerte Komponente in jeder Brückenzweigschaltung mit einer Diode entgegengesetzt parallel geschaltet ist.

6. Wandler (120, 300) nach einem der Ansprüche 1 bis 5, wobei das Energiespeicherungselement ein polarer Kondensator ist.

7. Wandler (120, 300) nach einem der Ansprüche 1 bis 6, wobei das erste Ende des Filters (320) auf Masse gelegt ist.

8. Wandler (120, 300) nach einem der Ansprüche 1 bis 7, wobei das Filter (320) eine Leistungsinduktivität und einen Filter(320)-Kondensator umfasst.

## Revendications

1. Convertisseur (120, 300), configuré pour être connecté entre un système de courant direct et un système de courant alternatif pour une conversion mutuelle entre un courant direct et un courant alternatif, dans lequel le convertisseur (120, 300) comprend un réseau de commutation (310), un filtre (320) et une unité de commande (330), le réseau de commutation (310) comprend un premier circuit de commutation (311) et un deuxième circuit de commutation (322), l'unité de commande (330) est configurée pour émettre un signal de commande vers le réseau de commutation (310), le réseau de commutation (310) est configuré pour convertir, en tension à niveaux multiples en fonction du signal de commande qui est émis par l'unité de commande (330), un courant direct qui est émis par le système de courant direct, et le filtre (320) est configuré pour émettre un courant alternatif vers le système de courant alternatif en fonction des niveaux multiples ;
le premier circuit de commutation (311) comprend M éléments de stockage d'énergie et M circuits à bras en pont, un des M circuits à bras en pont comprend seulement un composant entièrement commandé, les M-1 circuits à bras en pont restants comprennent chacun deux composants entièrement commandés qui sont connectés de manière inverse en série, et M est un nombre entier supérieur ou égal à 1 ;
une première extrémité d'un i^{e} circuit à bras en pont parmi les M circuits à bras en pont est connectée à une première extrémité d'un (i+1)^{e} circuit à bras en pont parmi les M circuits à bras en pont en utilisant un i^{e} élément de stockage d'énergie parmi les M éléments de stockage d'énergie, une première extrémité d'un M^{e} circuit à bras en pont parmi les M circuits à bras en pont est connectée à une première extrémité du filtre (320) en utilisant un M^{e} élément de stockage d'énergie parmi les M éléments de stockage d'énergie, une seconde extrémité de chacun des M circuits à bras en pont est connectée à une seconde extrémité du filtre (320), et i est un nombre entier qui est supérieur ou égal à 1 et inférieur à M+1 ;
le deuxième circuit de commutation (322) comprend N éléments de stockage d'énergie et N circuits à bras en pont, un des N circuits à bras en pont comprend seulement un composant entièrement commandé, les N-1 circuits à bras en pont restants comprennent chacun deux composants entièrement commandés qui sont connectés de manière inverse en série, et N est un nombre entier supérieur ou égal à 4-M ;
une première extrémité d'un je circuit à bras en pont parmi les N circuits à bras en pont est connectée à une première extrémité d'un (j+1)^{e} circuit à bras en pont parmi les N circuits à bras en pont en utilisant un j^{e} élément de stockage d'énergie parmi les N éléments de stockage d'énergie, une première extrémité d'un N^{e} circuit à bras en pont parmi les N circuits à bras en pont est connectée à la première extrémité du filtre (320) en utilisant un N^{e} élément de stockage d'énergie parmi les N éléments de stockage d'énergie, une seconde extrémité de chacun des N circuits à bras en pont est connectée à la seconde extrémité du filtre (320), et j est un nombre entier qui est supérieur ou égal à 1 et inférieur à N+1 ; et
chaque composant entièrement commandé parmi les N circuits à bras en pont et les M circuits à bras en pont est connecté à l'unité de commande (330), et l'unité de commande (330) est configurée spécifiquement pour commander la mise en marche et l'arrêt de chaque composant entièrement commandé,
dans lequel le premier circuit de commutation et le deuxième circuit de commutation comprennent différents nombres de circuits à bras en pont, et dans lequel chaque composant entièrement commandé est un transistor de commutation.

2. Convertisseur selon la revendication 1, dans lequel le réseau de commutation comprend en outre un troisième circuit de commutation (313 ; Q7, Q8) ;
le troisième circuit de commutation comprend deux composants entièrement commandés qui sont connectés de manière inverse en série, une première extrémité du troisième circuit de commutation est connectée à la première extrémité du filtre (320), une seconde extrémité du troisième circuit de commutation est connectée à la seconde extrémité du filtre, chaque composant entièrement commandé dans le troisième circuit de commutation est connecté à l'unité de commande, et l'unité de commande est configurée pour commander la mise en marche et l'arrêt de chaque composant entièrement commandé dans le troisième circuit de commutation.

3. Convertisseur (120, 300) selon la revendication 1 ou 2, dans lequel M est un nombre entier supérieur ou égal à 2, et M = N.

4. Convertisseur (120, 300) selon l'une quelconque des revendications 1 à 3, dans lequel chaque composant entièrement commandé comprend une diode qui est connectée de manière inverse au composant entièrement commandé en parallèle.

5. Convertisseur (120, 300) selon l'une quelconque des revendications 1 à 3, dans lequel le composant entièrement commandé dans chaque circuit à bras en pont est connecté de manière inverse à une diode en parallèle.

6. Convertisseur (120, 300) selon l'une quelconque des revendications 1 à 5, dans lequel l'élément de stockage d'énergie est un condensateur polaire.

7. Convertisseur (120, 300) selon l'une quelconque des revendications 1 à 6, dans lequel la première extrémité du filtre (320) est mise à la terre.

8. Convertisseur (120, 300) selon l'une quelconque des revendications 1 à 7, dans lequel le filtre (320) comprend un inducteur de puissance et un condensateur de filtre (320).
